# EUROPÄISCHE PATENTSCHRIFT

(11) **EP 1 287 205 B1**
(45) Veröffentlichungstag und Bekanntmachung des Hinweises auf die Patenterteilung: **09.08.2006**
(21) Anmeldenummer: 01947236.4
(22) Anmeldetag: 23.04.2001
(51) Int. Cl.: E01C 11/22

(54) **Entwässerungsrinne mit einem Abdeckteil**
Drainage channel with a cover piece
Caniveau d'écoulement des eaux avec d'un élément de recouvrement

(30) Priorität: 08.06.2000 DE 10028355
(43) Veröffentlichungstag der Anmeldung: 05.03.2003
(73) Patentinhaber: ACO SEVERIN AHLMANN GMBH & CO. KG, 24755 Rendsburg (DE)
(72) Erfinder: MÜLLER, Michael, 24105 Kiel (DE)
(74) Vertreter: Bohnenberger, Johannes
(86) Internationale Anmeldenummer: PCT/EP2001/004574
(87) Internationale Veröffentlichungsnummer: WO 2001/094704

(56) Entgegenhaltungen:
- EP-A- 0 469 265
- EP-A- 0 578 445
- DE-A- 4 237 237
- DE-U- 29 811 277

## Beschreibung

Die vorliegende Erfindung bezieht sich auf eine Entwässerungsrinne mit einem Abdeckteil zum Einbau in den Boden und zum Entwässern einer Fläche nach dem Oberbegriff des Patentanspruchs 1 sowie auf ein Verfahren zur Herstellung einer Entwässerungsanordnung nach dem Oberbegriff des Patentanspruchs 8.

Entwässerungssysteme zur Ableitung von Oberflächenwasser aus großen Bereichen, wie z. B. Fußgängerbereiche und vergleichbare PKW-Parkflächen, Tiefgaragen usw. sind bereits bekannt. Bei solchen großen Bereichen wird eine sogenannte Linienentwässerung angewendet, bei der aneinandergereihte Rinnenkörper in den Boden eingebaut werden und ihre oberen Öffnungen durch Abdeckroste mit unterschiedlicher Gestaltung und Materialvielfalt abgedeckt werden. Es wird jedoch immer üblicher, daß solche Bereiche, wie beispielsweise Einkaufszentren, nicht mehr mit Beton oder Asphalt, sondern mit Pflastersteinen oder Hohlblocksteinen ausgelegt werden. Durch Abdeckroste werden die ästhetischen Wirkungen des Musters der Pflastersteine jedoch beeinträchtigt und das Aussehen des Oberflächenbereiches durch die Konturen des Entwässerungssystems unterbrochen.

Um eine unauffällige Entwässerung von gepflasterten Bereichen zu erzielen, werden auf Entwässerungsrinnen speziell angefertigte Rahmen angebracht, auf denen Standardprofilsteine derart aufgebracht und gehalten werden, daß zwischen den Profilsteinen eine Öffnung in Form eines Schlitzes freigelassen wird. Durch den Schlitz wird der Eintritt des Oberflächenwassers in die Entwässerungsrinnen ermöglicht. Nachteilig bei solchen Entwässerungssystemen sind einerseits die Notwendigkeit von Rahmen, die mit der Größe der jeweils verwendeten Pflastersteine oder Hohlblocksteine übereinstimmen müssen, und andererseits der schwierige Zusammenbau der Rahmen mit den Rinnenkörpern beim Pflastern der Oberfläche.

Aus der DE 42 37 237 A1 ist ein Abdeckteil für eine Entwässerungsrinne bekannt, das aus zwei längs verlaufenden entgegengesetzt L-förmigen Teilen besteht, die jeweils einen aufrechtstehenden Abschnitt und einen Abschnitt aufweisen, der so gestaltet ist, dass er die Entwässerungsrinne teilweise bedeckt, wobei die benachbarten aufrechtstehenden Abschnitte einen Schlitz zwischen einander definieren, durch den das Oberflächenwasser in die Entwässerungsrinne ablaufen kann. Dieses Entwässerungssystem kann einerseits einfach eingebaut werden und andererseits kann es bei jeder Größe oder Farbe der Pflastersteine oder Hohlblocksteine verwendet werden.

Wenn eine unter dem Pflaster liegende Trenn- oder Dichtschicht angebracht wird, um unter dem Boden liegende Bauwerke, z.B. eine Tiefgarage, vor Wasser abzusichern, das durch das Pflaster sickert, so muss zum Abführen des Sickerwassers eine Vielzahl von gesonderten (Punkt-) Abläufen angebracht werden, was aufwendig und teuer ist.

In der DE 298 11 277 U werden winkelförmige Abdeck- und Abstandshalter-Elemente beschrieben, die auf Querträger aufgesetzt und mit diesen Querträgern verschraubt werden. Um eine nachträgliche Verschiebung der Elemente gegenüber den Rinnenelementen zu ermöglichen, sind oberhalb der Querträger Langlöcher vorgesehen, die vollflächig durch die Querträger von unten abgedeckt sind. Es kann somit durch die Langlöcher kein Wasser abfließen.

Aus der EP-A-0 578 455 ist ein zweiteiliges U-förmiges Entwässerungssystem bekannt, das mittels eines Entwässerungsgitters, das planar mit der Oberfläche liegt, abgedeckt wird. Mit dieser Vorrichtung kann lediglich das Oberflächenwasser abgeleitet werden.

Der Erfindung liegt daher die Aufgabe zu Grunde, ein unauffälliges Entwässerungssystem sowohl für eine Oberflächenebene, als auch für eine tiefere Ebene zu schaffen, das einfach und kostengünstig hergestellt und in den Boden eingebaut werden kann und zu einer wirksamen Ableitung sowohl von Oberflächenwasser, als auch von Sickerwasser führen kann.

Diese Aufgabe wird hinsichtlich ihres Vorrichtungsaspektes durch ein Abdeckteil mit den Merkmalen des Patentanspruchs 1 sowie einer Entwässerungsanordnung mit den Merkmalen des Patentanspruchs 6 und hinsichtlich ihres Verfahrensaspektes durch ein Verfahren mit den kennzeichnenden Merkmalen des Patentanspruchs 8 gelöst.

Die Erfindung schließt den wesentlichen Gedanken ein, die Entwässerung in zwei Ebenen durch das Abdeckteil zu gewährleisten, wobei das Abdeckteil einerseits kostengünstig, leicht und einfach in der Herstellung ist, und andererseits auf der Entwässerungsrinne einfach angebracht werden kann.

Das Abdeckteil ist derart ausgebildet, daß es einen im wesentlichen ebenen Teil, der zum Abdecken einer oberen Öffnung der Entwässerungsrinne dient und einen aus dem ebenen Teil nach oben ragenden Fortsatz aufweist, der eine Einlauföffnung definiert. Durch diese Einlauföffnung wird die Entwässerung der Oberflächenebene gewährleistet. Die Entwässerung einer zweiten tieferen Ebene wird durch auf den ebenen Teil angeformte Öffnungen sichergestellt. Durch diese Öffnungen wird das durch eine Dränschicht eingedrungene und von einer Dichtungsbahn gehaltene Sickerwasser in die Entwässerungsrinne abgeführt.

Vorzugsweise werden diese Öffnungen in im wesentlichen regelmäßigen Abständen über die gesamte Länge des ebenen Teils angeordnet. Somit wird ein sicheres Auffangen und Einführen des Sickerwassers in die Entwässerungsrinne gewährleistet. Die Öffnungen werden vor dem Einbau durch ein Stanzpreßverfahren angeformt, wobei sie oval, kreisförmig, rechteckig oder aber auch dreieckförmig gebildet werden können.

Ein bevorzugtes Ausführungsbeispiel der erfindungsgemäßen Entwässerungsrinne mit Abdeckteil sieht vor, daß der Fortsatz durch zwei aufrechtstehende Platten definiert ist, die einen Entwässerungsschlitz bilden und symmetrisch zur Mittenebene des Abdeckteils angeordnet sind. Bei einer solchen Ausführung werden die Öffnungen in dem ebenen Teil auf den beiden Seiten verteilt.

Falls die Entwässerung für eine beispielsweise seitlich von einem Bordstein begrenzte Fahrbahn angewendet wird, ist es von Vorteil, den durch zwei aufrechtstehenden Platten definierten Fortsatz nahe einer Seitenkante des erfindungsgemäßen Abdeckteils anzuordnen. Bei dieser Ausführung werden die Öffnungen in dem ebenen Teil einseitig angeordnet.

Das Abdeckteil kann vorzugsweise aus rostfreiem Stahl, aus Gußeisen oder aus verzinktem Stahl hergestellt werden. Somit wird das Abdeckteil im Vergleich zu Abdeckteilen aus Beton relativ leicht sowie einfacher in der Herstellung. Darüber hinaus sind solche Stahlkonstruktionen in unterschiedlichen Bauhöhen herstellbar und können somit an die örtlichen zur Verfügung stehenden Bauhöhen angepaßt werden. Die vertikalen Abschnitte können auch höhenverstellbar ausgebildet werden.

Die Erfindung schließt weiterhin den wesentlichen Gedanken ein, eine Entwässerungsanordnung mit der erfindungsgemäßen Entwässerungsrinne mit Abdeckteil derart auszubilden, daß mindestens ein Kantenbereich des ebenen Teils des Abdeckteils mit einer Dichtungsbahn, die eine obere Pflasterschicht von einer unteren Stützschicht der zu entwässernden Fläche trennt, bedeckt ist. Das Sickerwasser wird wegen der Undurchlässigkeit der Dichtungsbahn seitlich abgeführt und kann über die in dem ebenen Teil befindlichen Öffnungen in die Entwässerungsrinne wirksam abgeführt werden.

Vorzugsweise wird der gesamte ebene Teil des Abdeckteils mit der Dichtungsbahn bedeckt, wobei in diese Öffnungen eingeschnitten werden, deren Lage und Größe mit den Öffnungen des ebenen Teils übereinstimmen. Somit wird ein sicheres Anbringen der Dichtungsbahn auf dem Abdeckteil und damit eine gesicherte Abführung des Sickerwassers in die Entwässerungsrinne gewährleistet.

Die Dichtungsbahn wird erst nach dem Auflegen des Abdeckteils auf der Entwässerungsrinne aufgebracht. Das Aufbringen kann durch Klebung oder dergleichen erfolgen. Erst nach dem Aufbringen der Dichtungsbahn auf dem ebenen Teil des Abdeckteils werden Öffnungen in der Dichtungsbahn eingeschnitten, die der Lage und der Größe der Öffnungen des ebenen Teils entsprechen. Somit werden das Eindringen des Sickerwassers in die Stützschicht verhindert und die Ableitung des Sickerwassers in die Entwässerungsrinne gewährleistet.

Bevorzugte Ausführungsformen der Erfindung ergeben sich aus den Unteransprüchen.

Nachfolgend werden bevorzugte Ausführungsformen der Erfindung anhand von Abbildungen näher erläutert.

Von diesen zeigen:
- Fig. 1: einen Querschnitt einer Ausführungsform der Entwässerungsrinne ,
- Fig. 2: eine Draufsicht auf das Abdeckteil gemäß Figur 1,
- Fig. 3: einen schematischen Querschnitt einer in den Boden eingebetteten Entwässerungsanordnung.

In der nachfolgenden Beschreibung werden für gleiche oder gleich wirkende Teile dieselben Bezugsziffern verwendet.

Bei großen Flächen werden sogenannte Linienentwässerungssysteme verwendet. Die Linienentwässerung umfaßt ein Netz von Entwässerungskanälen, die unter der Oberfläche verlaufen. Die Entwässerungskanäle sind aus miteinander verbundenen Entwässerungsrinnen aus Polymerbeton aufgebaut, auf deren oberen Öffnungen Abdeckteile angebracht werden.

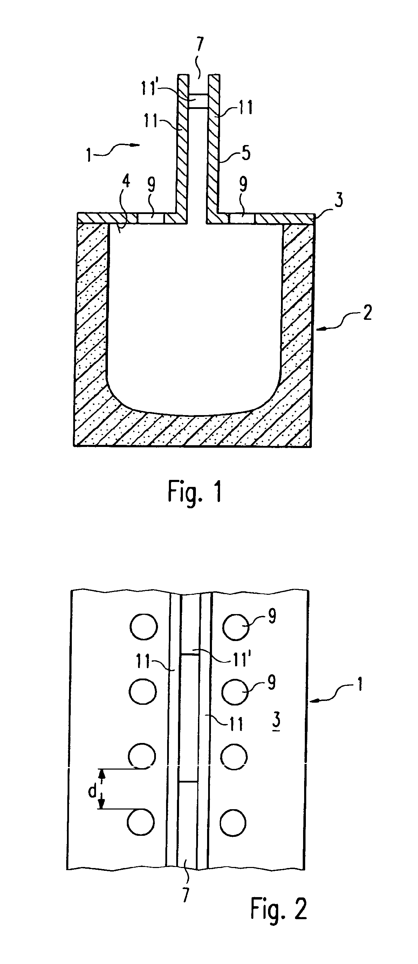

Figur 1 zeigt im Querschnitt eine erfindungsgemäße U-förmige Entwässerungsrinne 2, auf der das Abdeckteil 1 aus rostfreiem Stahl angebracht ist. Das Abdeckteil 1 ist mit der Entwässerungsrinne 2 durch Formschluß oder dergleichen verbunden. Alternativ kann das Abdeckteil 1 frei auf einer mit dem Rinnenkörper integrierten Stahlzarge sitzen. Das Abdeckteil 1 ist zum Abdecken einer oberen Öffnung 4 der Entwässerungsrinne 2 ausgebildet und besteht aus einem ebenen Teil 3 und aus einem nach oben, in Richtung Oberfläche ragenden vertikalen Fortsatz 5, der aus dem ebenen Teil 3 hervorragt. Der Fortsatz 5 weist eine Einlauföffnung 7 auf, durch die Oberflächenwasser in die Entwässerungsrinne 2 ablaufen kann. Die Einlauföffnung 7 ist schlitzförmig durch zwei aufrechtstehende Platten 11 des Fortsatzes 5 ausgebildet. Die aufrechtstehenden Platten 11 werden durch Abstandteile 11' in einem erforderlichen Abstand gehalten. Die Abstandteile 11' sind in regelmäßigen Intervallen über die gesamte Länge des Abdeckteils 1 angeordnet. Der ebene Teil 3 des Abdeckteils 1 weist zusätzliche Öffnungen 9 auf, die zum Aufnehmen von anfallendem Sickerwasser auf einer tieferen Ebene und zum Abführen des Sickerwassers in die Entwässerungsrinne 2 dienen.

Figur 2 zeigt das Abdeckteil 1 in Draufsicht. Bei dieser Ausführungsform des Abdeckteils 1 sind die aufrechtstehenden Platten 11, die eine Einlauföffnung 7 in Form eines Schlitzes definieren, symmetrisch zur Mittenebene des Abdeckteils 1 angeordnet. Die Öffnungen 9 in dem ebenen Teil 3 sind somit auf den beiden Seiten und in Reihe über die gesamte Länge des ebenen Teils 3 verteilt. Die Öffnungen 9 sind in regelmäßigen Abständen d angeordnet und sind durch ein Stanzpreßverfahren vorgefertigt. Diese Öffnungen 9 können nicht nur kreisförmig, wie in Figur 2 gezeigt, sondern auch quadratisch oder dreieckförmig ausgebildet werden. Die aufrechtstehenden Platten 11 werden durch Abstandteile 11' im für die Einlauföffnung 7 erforderlichen Abstand gehalten.

In einer nicht dargestellten Ausführungsform des Abdeckteils 1 sind die aufrechtstehenden Platten 11, die einen Entwässerungsschlitz definieren, nahe einer Seitenkante des Abdeckteils 1 angeordnet. Bei dieser Ausführungsform befinden sich die Öffnungen 9 einseitig in dem ebenen Teil 3, wobei sie über die gesamte Länge des ebenen Teils 3 und in regelmäßigen Abständen angeordnet werden.

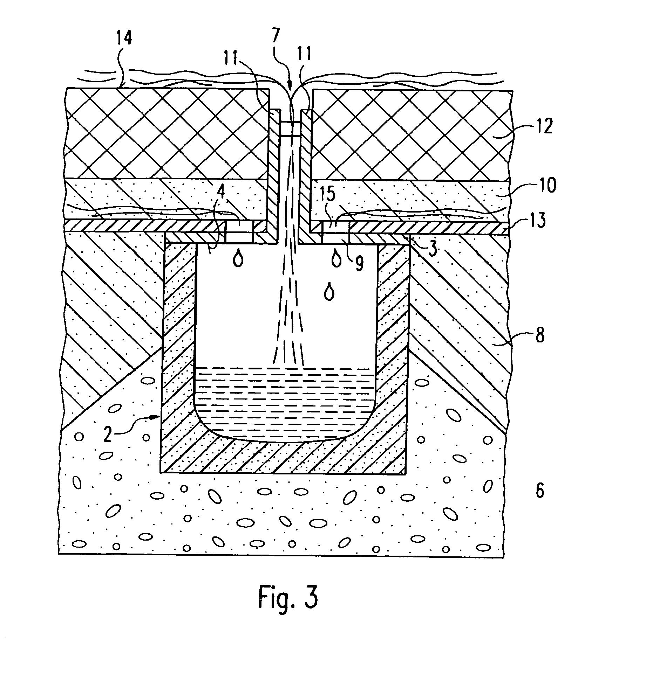

Bei der Ausführungsform nach Figur 3 ist eine in dem Boden eingebettete Entwässerungsanordnung gezeigt sowie der notwendige Schichtaufbau des Bodens. Bei dieser Ausführungsform sind im Querschnitt U-förmige Entwässerungsrinnen 2 aus Polymerbeton, der sich durch extreme Beständigkeit und Festigkeit auszeichnet, in einem Betonfundament 6 eingebettet. Dieses haltende Betonfundament 6 endet jedoch unterhalb einer oberen Öffnung 4 der Entwässerungsrinne 2 und ist folglich in der fertigen Oberfläche nicht sichtbar. Auf die obere Öffnung 4 der Entwässerungsrinne 2 ist das Abdeckteil 1 aufgesetzt und mit ihm formschlüssig verbunden. Der Fortsatz 5 des Abdeckteils 1 definiert eine Einlauföffnung 7, durch die Oberflächenwasser von der zu entwässernden Fläche in die Entwässerungsrinne 2 abläuft. Der ebene Teil 3 des Abdeckteils 1 weist zusätzliche Öffnungen 9 auf, die in regelmäßigen Abständen und über die gesamte Länge auf dem ebenen Teil 3 angeordnet sind.

Über das Betonfundament 6 wird eine zweite WV-Betonschicht 8 eingelegt, die den oberen Teil der Entwässerungsrinne 2 und den ebenen Teil 3 des Abdeckteils 1 ummantelt. Auf die zweite WV-Betonschicht 8 wird die Dichtungsbahn 13 aufgelegt, die sich auf den ebenen Teil 3 des Abdeckteils 1 erstreckt. Das Auflegen der Dichtungsbahn 13 verhindert das Eindringen von Sickerwasser in die Betonschicht und somit wird ihre Stützfunktion nicht beeinträchtigt. Die Dichtungsbahn 13 wird durch Aufkleben auf dem ebenen Teil 3 befestigt. Auf die Dichtungsbahn 13 werden dann Öffnungen 15 eingeschnitten oder eingedrückt, deren Lage der Lage der Öffnungen 9 des ebenen Teils 3 entspricht. Auf die Dichtungsbahn 13 wird eine Dränschicht 10 aufgelegt, wobei das Sickerwasser, das durch die Dränschicht 10 eingedrungen ist, durch die Öffnungen 15 der Dichtungsbahn 13 und die korrespondierenden Öffnungen 9 des ebenen Teils 3 in die Entwässerungsrinne 2 abgeführt wird. Pflastersteine 12, die zum Pflastern der Fläche verwendet werden, werden direkt auf die Dränschicht 10 und angrenzend an die aufrechtstehenden Platten 11 des Abdeckteils 1 gelegt. Der sich in Richtung Oberfläche erstreckende Fortsatz 5 des Abdeckteils 1 dient als Stützfläche für die Pflastersteine 12. Die Höhe des Fortsatzes 5 wird so gewählt, daß die obere Oberfläche des Pflasters 14 über den Kanten der aufrechtstehenden Platten 11 des Fortsatzes 5 oder bündig zu ihnen steht. Somit ist die schlitzförmige Einlauföffnung 7, die durch die aufrechtstehenden Platten 11 definiert ist, unsichtbar und stört das Muster der Pflasterung nicht.

Bei einer Entwässerungsanordnung mit der erfindungsgemäßen Entwässerungsrinne mit Abdeckteil ist es besonders vorteilhaft, daß einerseits bei großen Pflasterflächen die Entwässerung der Oberfläche unsichtbar erfolgt und andererseits auch eine Entwässerung auf einer tieferen Dichtungsebene ermöglicht wird.

### Bezugszeichenliste

- 1 -: Abdeckteil
- 2 -: Entwässerungsrinne
- 3 -: ebener Teil
- 4 -: obere Öffnung der Entwässerungsrinne
- 5 -: Fortsatz
- 6 -: Betonfundament
- 7 -: Einlauföffnung
- 8 -: WV-Betonschicht
- 9 -: Öffnungen des ebenen Teils
- 10 -: Dränschicht
- 11 -: Platten
- 11' -: Abstandteil
- 12 -: Pflaster
- 13 -: Dichtungsbahn
- 14 -: Oberfläche des Pflasters
- 15 -: Dichtungsbahn-Öffnungen

## Patentansprüche

1. Entwässerungsrinne (2) mit einem Abdeckteil (1)zum Einbau in den Boden und zum Entwässern einer Fläche, welches einen im wesentlichen ebenen Teil (3) aufweist, der zum Abdecken einer oberen Öffnung der Entwässerungsrinne (2) ausgebildet ist, und welches einen nach oben ragenden Fortsatz (5) aufweist, der aus dem ebenen Teil (3) im wesentlichen vertikal hervorragt und eine Einlauföffnung (7) definiert, durch die Wasser von der zu entwässernden höher liegenden Fläche in die Entwässerungsrinne ablaufen kann,
**dadurch gekennzeichnet, dass**
der ebene Teil (3) Öffnungen (9) zum Aufnehmen von auf dessen tieferen Ebene anfallendem Sickerwasser aufweist.

2. Entwässerungsrinne (2) nach Anspruch 1,
**dadurch gekennzeichnet, dass**
die Öffnungen (9) in vorzugsweise regelmäßigen Abständen und vorzugsweise über die gesamte Länge auf dem ebenen Teil (3) angeordnet sind.

3. Entwässerungsrinne (2) nach einem der Ansprüche 1 oder 2,
**dadurch gekennzeichnet, dass**
der Fortsatz (5) durch zwei aufrechtstehende Platten (11) definiert ist, die einen Entwässerungsschlitz bilden und vorzugsweise symmetrisch zur Mittenebene des Abdeckteils (1) angeordnet sind, wobei die Öffnungen (9) in dem ebenen Teil (3) vorzugsweise auf den beiden Seiten verteilt sind.

4. Entwässerungsrinne (2) nach einem der Ansprüche 1 oder 2,
**dadurch gekennzeichnet, dass**
der Fortsatz (5) durch zwei aufrechtstehende Platten (11) definiert ist, die einen Entwässerungsschlitz bilden und nahe einer Seitenkante des Abdeckteils (1) angeordnet sind, wobei die Öffnungen (9) einseitig angeordnet sind.

5. Entwässerungsrinne (2) nach einem der vorangehenden Ansprüche,
**dadurch gekennzeichnet, dass**
das Abdeckteil (1) aus rostfreiem Stahl oder aus verzinktem Stahl besteht.

6. Entwässerungsanordnung mit einer Entwässerungsrinne (2) nach einem der Ansprüche 1 bis 5,
**dadurch gekennzeichnet, dass**
mindestens ein Kantenbereich des ebenen Teils (3) des Abdeckteils (1) mit einer Dichtungsbahn (13) bedeckt ist, welche eine obere Pflasterschicht von einer unteren Stützschicht der zu entwässernden Fläche trennt.

7. Entwässerungsanordnung nach Anspruch 6,
**dadurch gekennzeichnet,**
**daß** im wesentlichen der gesamte ebene Teil (3) mit der Dichtungsbahn (13) bedeckt ist und in diese Öffnungen (15) eingeschnitten sind, wobei die Lage der Öffnungen (15) der Dichtungsbahn (13) und der Öffnungen (9) des ebenen Teils (3) übereinstimmt.

8. Verfahren zur Herstellung einer Entwässerungsanordnung nach den Ansprüchen 6 oder 7,
**dadurch gekennzeichnet,**
**daß** die Dichtungsbahn (13) nach dem Auflegen des Abdeckteils (1) auf der Entwässerungsrinne (2) aufgebracht wird.

9. Verfahren nach Anspruch 8,
**dadurch gekennzeichnet , daß**
nach dem Aufbringen der Dichtungsbahn (13) über den ebenen Teil (3) des Abdeckteils (1) Öffnungen (15) in der Dichtungsbahn (13) eingeschnitten werden, deren Lage jeweils mit den Öffnungen (9) in dem ebenen Teil (3) übereinstimmt.

## Claims

1. Drainage channel (2) with a cover part (1) to be installed in the ground and to drain the surface of an area, which comprises a substantially flat part (3) so constructed as to cover an opening at the top of the drainage channel (2), and which also comprises an upward-directed projection (5) that extends substantially vertically from the flat part (3) and defines an inlet opening (7) through which the water coming from the higher-level surface to be drained can flow away into the drainage channel,
**characterized in that** the flat part (3) comprises openings (9) to receive water that has percolated down to its lower level.

2. Drainage channel (2) according to Claim 1,
**characterized in that** the openings (9) are disposed on the flat part (3) at preferably regular intervals and preferably over its entire length.

3. Drainage channel (2) according to one of the claims 1 or 2,
**characterized in that** the projection (5) is defined by two upright plates (11) that form a drainage slot and are preferably disposed symmetrically with respect to the midplane of the cover part (1), the openings (9) in the flat part (3) being preferably distributed on both sides.

4. Drainage channel (2) according to one of the claims 1 or 2,
**characterized in that** the projection (5) is defined by two upright plates (11) that form a drainage slot and are disposed near one side edge of the cover part (1), the openings (9) being disposed on one side.

5. Drainage channel (2) according to one of the preceding claims,
**characterized in that** the cover part (1) is made of stainless steel or galvanized steel.

6. Drainage arrangement with a drainage channel (2) according to one of the claims 1 to 5,
**characterized in that** at least one edge region of the flat part (3) of the cover part (1) is covered by a damp-proof sheet (13) that separates an upper pavement layer from a lower supporting layer of the area to be drained.

7. Drainage arrangement according to Claim 6,
**characterized in that** substantially the entire flat part (3) is covered by the damp-proof sheet (13) and openings (15) are cut into the latter, such that the positions of the openings (15) in the damp-proof sheet (13) coincide with those of the openings (9) in the flat part (3).

8. Method of producing a drainage arrangement according to Claims 6 or 7,
**characterized in that** the damp-proof sheet (13) is put into place after the cover part (1) has been set onto the drainage channel (2).

9. Method according to Claim 8,
**characterized in that** after the damp-proof sheet (13) has been put into place on the flat part (3) of the cover part (1), openings (15) are cut into the damp-proof sheet (13), the positions of which coincide with those of the openings (9) in the flat part (3).

## Revendications

1. Caniveau de drainage (2) avec un élément de recouvrement (1), à monter dans le sol et pour drainer une surface, qui présente une partie (3) sensiblement plane conçue pour recouvrir une ouverture supérieure du caniveau de drainage (2), et qui présente un prolongement (5) s'étendant vers le haut qui dépasse sensiblement verticalement de la partie plane (3) et définit une ouverture d'entrée (7) à travers laquelle l'eau de la surface à drainer, située plus haut, peut s'écouler dans le caniveau de drainage,
**caractérisé en ce que**
la partie plane (3) présente des ouvertures (9) pour recevoir l'eau d'infiltration tombant sur son plan situé plus bas.

2. Caniveau de drainage (2) selon la revendication 1,
**caractérisé en ce que**
les ouvertures (9) sont disposées suivant des écartements de préférence réguliers et de préférence sur toute la longueur de la partie plane (3).

3. Caniveau de drainage (2) selon l'une des revendications 1 ou 2,
**caractérisé en ce que**
le prolongement (5) est défini par deux plaques (11) se tenant verticalement qui forment une fente de drainage et qui sont disposées de préférence symétriquement par rapport au plan médian de l'élément de recouvrement (1), les ouvertures (9) étant réparties dans la partie plane (3) de préférence sur les deux côtés.

4. Caniveau de drainage (2) selon l'une des revendications 1 ou 2,
**caractérisé en ce que**
le prolongement (5) est défini par deux plaques (11) se tenant verticalement qui forment une fente de drainage et qui sont disposées à proximité d'un bord latéral de l'élément de recouvrement (1), les ouvertures (9) étant disposées d'un seul côté.

5. Caniveau de drainage (2) selon l'une des revendications précédentes,
**caractérisé en ce que**
l'élément de recouvrement (1) est réalisé en acier inoxydable ou en acier zingué.

6. Dispositif de drainage comportant un caniveau de drainage (2) selon l'une des revendications 1 à 5,
**caractérisé en ce que**
au moins une zone de bordure de la partie plane (3) de l'élément de recouvrement (1) est recouverte par une bande d'étanchéité (13) qui sépare une couche de pavage supérieure d'une couche support inférieure de la surface à drainer.

7. Dispositif de drainage selon la revendication 6,
**caractérisé en ce que**
la totalité de la partie plane (3) est recouverte pour l'essentiel par la bande d'étanchéité (13) et dans celle-ci sont découpées des ouvertures (15), la position des ouvertures (15) de la bande d'étanchéité (13) et des ouvertures (9) de la partie plane (3) coïncidant.

8. Procédé de fabrication d'un dispositif de drainage selon les revendications 6 ou 7,
**caractérisé en ce que**
la bande d'étanchéité (13) est placée après la mise en place de l'élément de recouvrement (1) sur le caniveau de drainage (2).

9. Procédé selon la revendication 8,
**caractérisé en ce que**
après mise en place de la bande d'étanchéité (13) sur la partie plane (3) de l'élément de recouvrement (1), des ouvertures (15) sont découpées dans la bande d'étanchéité (13), dont la position respective coïncide avec les ouvertures (9) de la partie plane (3).
